# EUROPEAN PATENT SPECIFICATION

(11) **EP 2 664 235 B1**
(45) Date of publication and mention of the grant of the patent: **31.12.2014**
(21) Application number: 12168383.3
(22) Date of filing: 16.05.2012
(51) Int. Cl.: A01K 15/02, A63H 27/00, F41B 3/02

(54) **Launch apparatus for a pet toy**
Startvorrichtung für ein Haustierspielzeug
Appareil de lancement pour jouet d'animaux domestiques

(43) Date of publication of application: 20.11.2013
(73) Proprietor: Sport It, LLC, Pueblo, CO 81005 (US)
(72) Inventor: Ying, Felix A, Pueblo, CO Colorado 81006 (US)
(74) Representative: Boult Wade Tennant

(56) References cited:
- US-A- 3 665 641
- US-A- 5 240 448
- US-A1- 2008 087 262
- US-A1- 2008 156 307

## Description

### Technical Field

The present invention is a launch apparatus for a pet toy; wherein a user plays with, exercises or trains a pet, in particular a dog, by using the launch apparatus to launch or throw the pet toy to be fetched or retrieved and returned by the pet to the user.

### Background

A myriad of pet toys made from nylon, cotton, hemp, plastic, latex, PET or similar materials have been on the market for quite some time. These toys are available in a variety of shapes, sizes, and designs and may or may not be stuffed with a filling material, such as PET or similar spun fiber, and may or may not include a plastic squeaker. Many animals or pets, in particular dogs, enjoy fetching these types of toys.

Pet owners or users commonly throw the toys some distance for the animal to retrieve and possibly return to the owner. The distance and frequency that most pet owners can throw the toy is very limited due to the physical strength of the pet owner and the generally light weight of the pet toy itself. Many owners, therefore, cannot exert sufficient energy to sustain a fetch or retrieve an return game with their pets and give up on throwing toys to their pets or merely throw the toy a short distance reducing the interaction they have with their pets.

Accordingly, an improved device or launch apparatus is needed to more easily throw a pet toy a greater distance by a user than the user can throw by hand to create a more sustainable and improved fetching or retrieval and return game and, more importantly, to improve play, exercise and training interaction between pets and their owners.

There are various launch apparatuses for both human and animal toys known in the prior art. Among these are US Patent 4,997,401 issued 5 March 1991 by Rose et al. for Aerial Toy discloses an aerial, glider type toy that is launched by an elastic device which is releasably connected to a hook member on the body of the toy.

US Patent 5,194,033 issued 16 March 1993 by Wright for Projectable Toy Stuffed Animal discloses a stuffed animal toy that is structured for being projected through the air; wherein an elongate tail projecting rearward from the body of the toy is extendable and has an elastic element therein which is used to launch the toy.

US Patent 5,282,453 issued 1 February 1994 by Chia for Toy Slingshot Device for Launching a Projectile discloses a slingshot device for a missile; wherein a launching wedge affixed to a free end of an elastic strap for releasably coupling the free end of the elastic strap with the missile and the other end of the elastic strap is connected to a launcher, such that upon drawing the free end of the elastic strap back away from the launcher and then releasing the free end, the missile is launched.

US Patent 5,863,250 issued 26 January 1999 by Harris for Aerial Toy discloses an aerial toy that is adapted to be launched into the air using an elastomeric band; wherein the toy has a notch and appendage on the underside of the nose portion of the aerial toy, which notch and appendage are adapted for receiving the elastomeric band of a launcher.

US Patent 6,443,792 issued 3 September 2002 by Forti et al. for Mechanically Launched Monowing Toy discloses a flying toy with a wing having a leading edge, a first end, and a second end; wherein a ballast element is coupled to the first end of the wing, and a launcher receiver element that receives a launcher is coupled to the ballast element.

US Patent 6,500,042 issued 31 December 2002 by LaPointe for Foam Trajectory Toys discloses a projectile toy having an elongate projectile member having a body portion connected to a nose portion; wherein a hook device is connected to the body portion near the nose potion, and an elastomeric tether for engaging the hook device can be stretched and released causing the projectile member to launch with the nose portion in front.

US Patent 6,595,160 issued 22 July 2003 by Williamson for Dog Exercise Apparatus and Method discloses a tennis ball throwing apparatus to exercise a dog, which apparatus includes a sling arrangement that permits easily throwing of balls a long distance.

US Patent Application 2008/0156307 published 3 July 2008 by Myers for Object Launcher and Method of Launching Object discloses a hand-held launcher for launching an object that includes a handle and a frame fixedly attached proximate the handle and extending forwardly from the handle; elastic tubing that is attached to a forward end of the frame; and a hook that is attached to an object to be launched where the hook engages the tubing when the tubing is positioned into a stretched position and wherein the hook is capable of being released from the tubing during launching.

### Summary

The present invention is a launch apparatus for a pet toy comprising a launcher. The launcher comprises a hook, which is connected to a strap, which strap is connected to a strap connector, which strap connector is connected to a grip. Preferably, an end of the strap is connected to the hook and another end of the strap is connected to the strap connector.

The launch apparatus further comprises a toy, the toy further comprises and is connected to a loop, wherein the loop releasably engages the hook of the launcher. Preferably, the loop is located on a ventral surface of the toy; and further preferably, the loop is located toward a leading edge of the toy. Optionally, the toy may further comprise a tail and/or at least a wing.

A user using the launcher of the present invention launches the toy by placing the loop of the toy over the hook of the launcher, stretching the strap to build elastic energy in the strap to a desired elastic tension capacity, and releasing the toy.

### Brief Description of the Drawings

**Figure 1** is perspective view of a launcher of the present invention.
**Figure 2** is a perspective view of a toy of the present invention.
**Figure 3** is perspective view of a launcher and a toy of the present invention primed and ready to be launched.

### List of Reference Numerals

- **2**: launcher
- **4**: grip
- **6**: strap connector
- **8**: shield
- **10**: strap
- **12**: hook
- **14**: toy
- **16**: body
- **17**: head
- **18**: tail
- **20**: loop
- **22**: wings

### Detailed Description

A launch apparatus for a pet toy of the present invention comprises a hand-held launcher that releasably interfaces with a launchable or throwable pet toy. To use the launcher of the present invention, a user releasably attaches the toy to the launcher and employs the elastic energy of the launcher to launch the toy.

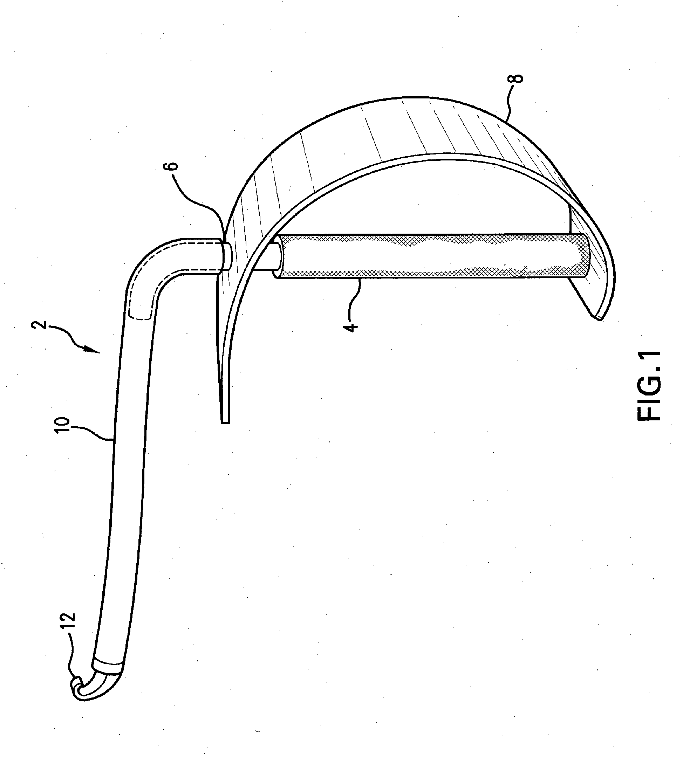

A launcher **2** of the present invention is show in **Fig. 1****.** The launcher **2** comprises a grip **4** interrelated with a shield **8.** Connected to the grip **4** is a strap connector **6.** An end of a strap **10** is connected to the strap connector **6** and an opposite end of the strap **10** is connected to a hook **12.**

The grip **4** of the launcher **2** is of a size sufficient to be held by a user's hand and may be tubular-shaped or any other shape suitable for being held in the user's hand. The grip **4** may be hollow or solid and may be made of any suitable material, such as plastic, wood, metal or the like, that has sufficient strength to withstand the forces applied to the launcher **2** when in use. The grip **4** may be shaped or molded with finger recesses to more readily conform to and be grasped by a user's hand. The grip **4** may have a texturized surface to afford, or be covered with foam, neoprene, or any other suitable material that affords, comfort and/or stability the to the user's grasp on the grip **4.**

The grip **4** is connected to a shield **8;** wherein the shield affords protection to the user's hand when the launcher **2** is in use. The shield may be of any suitable configuration, such as a partial sphere, or other convex, cubic or rectangular shape, and may be made of suitable material to afford protection to the user's hand, such as plastic or metal, when the launcher **2** is in use. As shown in **Fig. 1****,** preferably the shield **8** is a partial sphere in shape and attaches to a top end and a bottom end of the grip **4.**

As shown in **Fig. 1****,** a strap connecter **6** extends from the junction of the top end of the grip **4** and the shield **8.** The strap connector **6** preferably is constructed such that it emerges at a 0° angle from the top end of the grip **8** and then turns at an angle of from approximately 45° to approximately 90°to a central, longitudinal axis of the grip **8** and extends rearward away from a front of the shield **8.** The strap connector **6** may be made of any suitable material, such as metal, wood, plastic or the like.

The grip **4,** shield **8** and strap connector **6** of the launcher **2** may be comprised of separate, integral components of any suitable material, such as metal, wood, plastic or the like. Preferably, the grip **4,** shield **8** and strap connector **6** of the launcher **2** are an integral, singular component made of injection-molded plastic or any other suitable material that may be crafted into an integral, singular component.

As shown in **Fig. 1****,** the strap connector **6** is connected to a first end of a strap **10.** A second end of the strap **10** is connected to a hook **12.** The strap **10** may be of any suitable material capable of building, storing and releasing elastic energy, such as an elastic band, rubber tubing, latex tubing or the like. The hook **12** may be made of any suitable, rigid material, such as metal, plastic or the like, that will retain its shape and not deform or break when subjected to load forces. The hook **12** and may be configured in any suitable shape or size such that the hook **12** releasably engages with a loop **20** of a toy **14.**

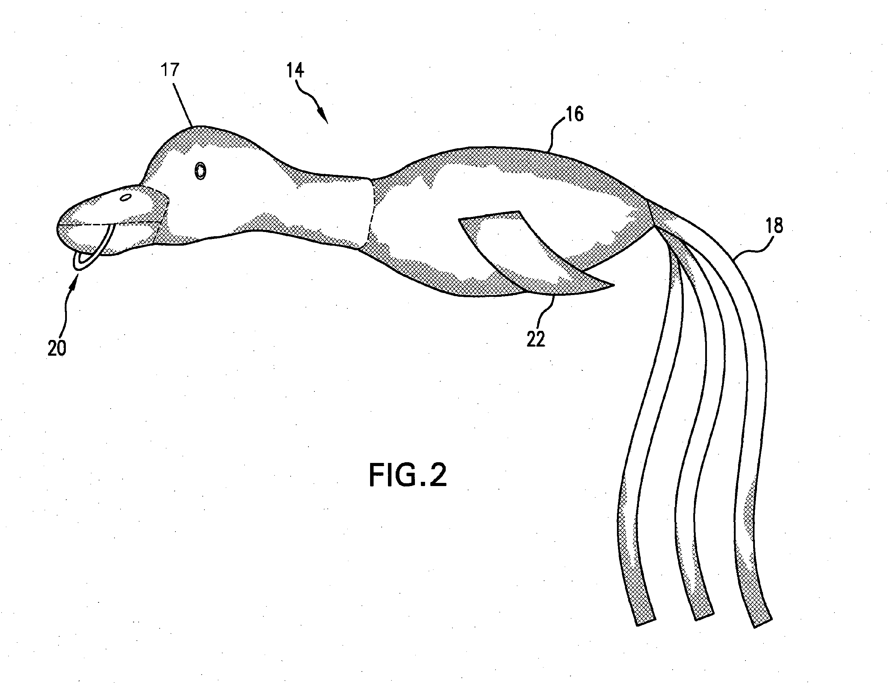

A toy **14** of the present invention is shown in **Fig. 2****.** The toy **14** may be made of any suitable material that is durable and will hold up to wear and tear endured during use, and that is yieldable enough to not damage a pet's mouth and teeth when the toy **14** is held in the pet's mouth, such as nylon, cotton, hemp, plastic, latex, PET or the like. The toy **14** may be of any shape or appearance desired by a user, such as a person, animal, ball, bone or other object.

The toy **14** comprises a body **16** and optionally may comprise a head **17** connected to the body **16.** The toy **14** further comprises an optional, but preferable, tail **18** connected to the body **16.**

The toy **14** further comprises a loop **20** connected to the toy **14.** The loop 20 may be located at a front end of the body **16** and may be placed on either a leading edge of the body, or a dorsal or ventral surface of the body **16.** Preferably, the loop **20** is placed on a ventral surface of the body **16** and toward the front end of the body **16** to achieve a most effective launch by a launcher **2** of the present invention. The loop **20** may be made of any suitable material capable of sustaining load forces applied to the loop **20,** such as nylon, cotton, hemp, rubber, plastic or the like.

The hook **12** is connected to the strap **10**, to prevent the pet from harming itself with or ingesting the hook **12** when retrieving and returning the toy **14** to the user. The hook **12** is connected to the strap **10,** because when the toy **14** is launched by the launcher **2** of the present invention, a greater flight distance of the toy **14** is achieved, than if the hook **12** were connected to the toy **14.**

The toy **14** optionally, but preferably, may comprise a tail **18.** The tail **18** is connected to the body **16** of the toy **14** and aids in flight arc, distance, duration and stability of the toy **14** after it is launched by the launcher **2** of the present invention. The tail **18** may be a unitary tail or a multi-part tail. The tail **18** may be made of any suitable material, such as nylon, cotton, hemp, rubber, plastic, feathers or the like. The tail **18** may be either rigid or flexible as desired by the user, but the tail **18** should have sufficient drag to allow the toy **14** to attain a true flight arc when launched by the launcher **2** of the present invention. The tail **18** may be connected to and a unitary part of the body **16** of the toy **14,** or it may be connected to, but a separate part of, the body **16** of the toy **14.**

The toy **14** optionally may comprise at least a wing or fin **22;** wherein the wings **22** are connected to the body **16** of the toy **14** and may be placed upon the body **16** as may be desired, such as laterally, ventrally, or dorsally, to aid in flight arc, distance, duration and stability of the toy **14** after it is launched by the launcher **2** of the present invention. The wings **22** may be made of any suitable material capable of aiding in flight arc, distance, duration and stability of the toy **14,** such as plastic, fabric, wood, metal or the like.

Preferably, the toy **14** is weight forward in construction. Further preferably, a front half of a total length of the body **16** of the toy **14** comprises approximately 60% of the total weight of the toy **14.** Further preferably, a weight forward area of the toy **14** of approximately a front third of the total length of the body **16** of the toy **14** has a preferable percentage ratio of forward weight of the body **16** of the toy **14** to the total weight of the toy **14** from about 20:100 to about 30:100. The toy **14** of the present invention preferably is weight forward in construction to achieve optimal flight arc, distance, duration and stability of the toy **14** when launched by the launcher **2** of the present invention.

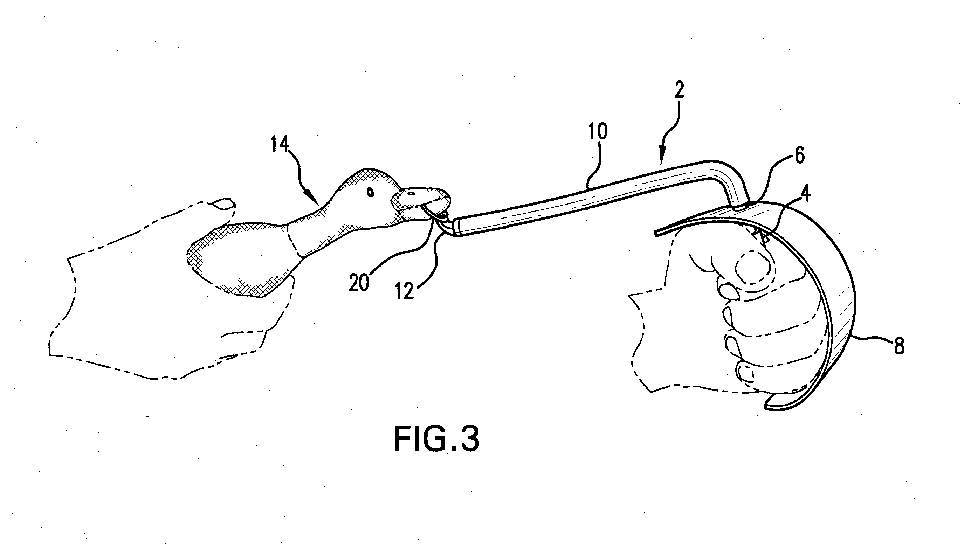

A user using the launcher **2** of the present invention can launch the toy **14** a great distance from approximately 50' to approximately 120' without substantial or exhausting effort by the user. To operate the launcher **2** of the present invention, as shown in **Fig. 3****,** first the user, according to the user's preference, grasps in a hand the launcher **2** by the grip **4** with the shield **8** in a position such that the shield **8** covers the user's hand and faces toward the user. Second, the user grasps the toy **14** with another hand and places the loop **20** of the toy **14** over the hook **12** of the launcher **2.** Third, the user preferably fully extends the arm and hand grasping the launcher **2** ventrally forward and upward at anywhere from at least approximately parallel to approximately 90° perpendicular to a surface of the ground. Fourth, the user draws the hand grasping the toy **14** along the same plane as the hand and arm grasping the launcher **2,** but in a direction opposite from the grip **4,** to stretch the strap **10** to build elastic energy in the strap **10** to a desired elastic tension capacity. Fifth, the user releases the toy **14,** thus launching the toy **14** with the launcher **2** of the present invention.

When the user releases the toy **14,** the strap **10** rapidly contracts to its original, static length and transfers the elastic energy built-up and stored in the strap **10** to the toy **14;** whereby the toy **14** is thrust forward and launched at a high velocity from the launcher **2** of the present invention. As the toy **14** moves forward in its flight, the loop **20** is released from the hook **12** and the toy **14** is freed and propelled forward. A distance that the toy **14** can travel after being launched with the launcher **2** of the present invention is easily controlled by the user through limiting or extending the length to which the strap **10** is stretched and the concomitant amount of elastic energy created thereby and stored in the strap **10** for transfer to the toy **14** upon its release and launch.

The present invention is described with reference to specific embodiments; however, it is understood that modifications and variations of the present invention are possible without departing from the scope of the invention, which is defined by the claims set forth below. Unless defined otherwise, all technical and scientific terms used herein have the same meaning as commonly understood by one of ordinary skill in the art to which this invention belongs.

## Claims

1. A launch apparatus for a pet toy, comprising:
a launcher (12) comprising a hook (12), a strap (10) connected to the hook, a strap connector (6) connected to the strap, and a grip (4) connected to the strap connector; and
a toy (14), said toy comprising a loop (20), wherein the loop is operable to releasably engage the hook of the launcher.

2. A launch apparatus according to claim 1, wherein the launcher (12) further comprises a shield (18).

3. A launch apparatus according to claim 1 or claim 2, further wherein an end of the strap (10) is connected to the hook (12) and another end of the strap is connected to the strap connector (16).

4. A launch apparatus according to claim 1, further wherein the loop (20) is located on a ventral surface of the toy (14).

5. A launch apparatus according to claim 1 or claim 4, further wherein the loop (20) is located toward a leading edge of the toy (14).

6. A launch apparatus according to any one of claims 1, 4 or 5, further wherein the toy (14) further comprises a tail.

7. A launch apparatus according to any one of claims 1, 4, 5 or 6, further wherein the toy further comprises at least a wing.

## Patentansprüche

1. Abschussvorrichtung für ein Tierspielzeug, umfassend:
ein Abschusselement (12), umfassend einen Haken (12), einen mit dem Haken verbundenen Riemen (10), ein mit dem Riemen verbundenes Riemen-Verbindungselement (6) und einen mit dem Riemen-Verbindungselement verbundenen Griff (4); und
ein Spielzeug (14), wobei das Spielzeug eine Schlaufe (20) umfasst, wobei die Schlaufe dazu betreibbar ist, lösbar den Haken des Abschusselements einzugreifen.

2. Abschussvorrichtung nach Anspruch 1, wobei das Abschusselement (12) ferner einen Schild (18) umfasst.

3. Abschussvorrichtung nach Anspruch 1 oder 2, wobei ferner ein Ende des Riemens (10) mit dem Haken (12) verbunden ist, und ein anderes Ende des Riemens mit dem Riemen-Verbindungselement (16) verbunden ist.

4. Abschussvorrichtung nach Anspruch 1, wobei ferner die Schlaufe (20) an einer Bauchfläche des Spielzeugs (14) platziert ist.

5. Abschussvorrichtung nach Anspruch 1 oder Anspruch 4, wobei ferner die Schlaufe (20) in Richtung eines vorderen Rands des Spielzeugs (14) platziert ist.

6. Abschussvorrichtung nach einem der Ansprüche 1, 4 oder 5, wobei ferner das Spielzeug (14) einen Schwanz umfasst.

7. Abschussvorrichtung nach einem der Ansprüche 1, 4, 5 oder 6, wobei ferner das Spielzeug wenigstens einen Flügel umfasst.

## Revendications

1. Appareil de lancement de jouet pour animal de compagnie, comprenant :
un lanceur (12) comprenant un crochet (12), une bande (10) reliée au crochet, un connecteur de bande (6) relié à la bande, et une poignée (4) reliée au connecteur de bande ; et
un jouet (14), ledit jouet comprenant une boucle (20), la boucle servant à engager, de façon amovible, le crochet du lanceur.

2. Appareil de lancement selon la revendication 1, dans lequel le lanceur (12) comprend, en outre, un écran de protection (18).

3. Appareil de lancement selon la revendication 1 ou la revendication 2, dans lequel, en outre, une extrémité de la bande (10) est reliée au crochet (12) et une autre extrémité de la bande est reliée au connecteur de bande (16).

4. Appareil de lancement selon la revendication 1, dans lequel, en outre, la boucle (20) est située sur une surface ventrale du jouet (14).

5. Appareil de lancement selon la revendication 1 ou la revendication 4, dans lequel, en outre, la boucle (20) est située vers un bord d'attaque du jouet (14).

6. Appareil de lancement selon l'une quelconque des revendications 1, 4 ou 5, dans lequel, en outre, le jouet (14) comprend également une queue.

7. Appareil de lancement selon l'une quelconque des revendications 1, 4, 5 ou 6, dans lequel, en outre, le jouet comprend également au moins une aile.
